# EUROPEAN PATENT APPLICATION

(11) **EP 4 821 674 A1**
(43) Date of publication of application: **14.10.2026**
(21) Application number: 25170136.3
(22) Date of filing: 11.04.2025
(51) Int. Cl.: B32B 5/02, B32B 5/12, B32B 5/26, H01M 50/249

(54) **AUTOMOTIVE STRUCTURAL PART WITH A REINFORCED BORDER**

(71) Applicant: Autoneum Management AG, 8406 Winterthur (CH)
(72) Inventor: Costa, Liborio Ivano, 8405 Winterthur (CH); Papadimas, Alexander, 8041 Zürich (CH)

(57) **Abstract**

Automotive structural part comprising a core layer and a first and second skin layer, and whereby the core layer is compressed between the skin layers and whereby the core layer extends beyond both skin layers in at least one border region, whereby the core layer at least in part of the border region further comprises randomly orientated clusters of parallel fibers.

## Description

### Technical Field

The invention is directed to an automotive structural part with a reinforced border, the use of such an automotive structural part and a method of producing such an automotive structural part.

### Background

Structural automotive parts, especially those designed for underbody protection in battery electric vehicles have traditionally been made from metals. However, recently, due to weight, performance, design and manufacturing reasons, automotive manufacturers have increasingly shifted to composite materials for in particularly the area around the battery housing. These parts are there to protect the battery from any impact or penetration that may occur while driving. Upon impact the part should not deflect more than is acceptable to prevent any damage to the battery housing or worse the battery cells.

One option of composite solutions may be a sandwich construction, with skins composed of endless filament based composite materials to provide strength and stiffness. The core in these sandwich constructions is usually a fiber reinforced compound which adds to the strength and stiffness of the composite but allows the core material to flow between the skins during compression moulding to form the desired part shape and thickness. In some cases, the core material can flow in addition through the skin layer and or openings within the skin layer to form protrusions on the surface like stiffening ribs.

The continuous filament nature of the skins are often a limiting factor in the formability of the overall composite construction, in particular in the border region, where the parts typically have more complex geometries like stepped cross-sections along the part edges and/or in areas of shaped fixations. Such complex geometries can be extremely difficult, and in some instances impossible, to form with endless filament-based materials, even if sufficient press forces are available as the endless filaments do not stretch to conform to the part shape. Hence it is preferred to extend the core material beyond the skins rather than extending the skin layers in the border regions.

In addition, extending the endless filaments to the border would increase the amount of skin material that will have to be trimmed to follow the irregular part edges.

Hence, it is beneficial to not extend the skin layers into the border, however, doing so results in a significant reduction in material performance of the border regions. As most of the part fixations are usually in these border regions, there will be limited strength in the fixation points, increasing fault likelihood in the border region. To compensate for the reduction of material performance in the border region, the number of mounting points is increased. Thereby increasing material usage and/or manufacturing complexity. Further increasing the number of mounting points amplifies the weakening of the border region.

There is a need to overcome the problems in structural parts as described in prior art, in particular structural parts as used for protecting under and around battery housing in battery electric vehicles. In particular there is a need for a more reliable border region able to withstand forces against the structural part when mounted on a vehicle without tearing at the fixation points or breakage of the border region.

### Summary of the Invention

The object is achieved by the automotive structural part comprising a core layer comprising chopped fibers embedded in a first thermoplastic matrix, and a first and second skin layer, whereby the first and second skin layer comprises continuous filaments embedded in a second thermoplastic matrix and whereby the core layer is compressed between the skin layers and all layers are bonded to the adjacent layer, and whereby the core layer extends beyond both skin layers in at least one border region, according to the main claim and the claims dependent on it, as well as by the method of producing such a structural part and the use of such a structural part in an automotive application, for example in a battery electric vehicle.

In particular, by the core layer further comprising randomly orientated clusters of parallel fibers at least in part of the border region. The overall fiber content of the core material in these regions is enriched, in turn increasing the overall reinforcement of the border region and thereby enhancing the mechanical properties of that region. Surprisingly, the use of random orientated clusters of parallel fibers does not negatively interfere with the moulding and 3D shaping of the part, in particular 3D border regions may be achieved.

These clusters of parallel fibers contain a high fiber content, randomly orientated within the border region to increase the structural performance of the part. It furthermore increases the density of the core material in the border region, preferably the density of the border region is at least 10% higher than the density of the core. This equalises the strength of the border regions without the need of extending the endless filaments or continuous filaments within these regions, reducing the problems as described for the prior art. Preferably, the fiber content of the border region is at least 40% by weight, preferably at least 50%.

The enrichment of the core material in the border region with randomly orientated clusters of parallel fibers as claimed may be achieved by using chopped material from endless filament tape or composite textile production or using recycled cut offs of such material. Unidirectional tape use parallel laid continuous filaments embedded in a matrix, whereas organosheets typically use parallel laid or a combination of parallel and perpendicular laid continuous filaments embedded in a matrix (for the sake of this description called third matrix). Such tapes or sheets are cut into required shapes and sizes, producing a considerable volume of off-cuts or flakes, small flakes of parallel filaments in a matrix (the third matrix). The tapes or sheets have, preferably glass-based filaments. They are delivered in a small platelike structure, hence the direction of the filaments is maintained, until the matrix would be reheated to the melting temperature for instance in an extruder. However, when added within a gentler process, the parallel fiber structure will remain substantially as clusters of parallel oriented fibers. These flakes can be applied locally to enrich the region, without interfering with the remainder, and if applied in a solid form and only heated during the forming of the core, the melting temperature will not be reached early enough for the parallel clusters to dissolve in single fibers, hence the parallel clusters of filament fibers will substantially remain.

The randomly orientated cluster of parallel fibers can comprise more than one ply, preferably the fibers in the cluster are organized as cross ply in 0 and 90° angle to the fiber direction in the adjacent ply, and or as multi-ply in any angle between and included 0 and 90° to the fiber direction in the adjacent ply or plies.

The randomly orientated clusters of parallel fibers are embedded in a third thermoplastic matrix to substantially maintain the parallel orientation of the cluster in the core.

The randomly oriented clusters of parallel fibers can be off-cuts or left over section of unidirectional tapes, organosheets or other layered composite materials that have been cut to the designated size. However, despite the possible similarity in source, no filament-based skin layer should be present in border or frame region as this would hamper any intricate shaping of border geometries.

The flakes forming the clusters are cut to size such that most fibers within the clusters have at least a fiber length between 2 and 30 mm, preferably between 3 and 20 mm.

Surprisingly, despite the high fiber content in the randomly orientated clusters of parallel fibers, the mouldability of the border or frame region is not negatively impacted like it would with filaments-based materials. The short cut nature of the randomly orientated clusters of parallel fibers in a third matrix would enable a material flow together with the core material during the moulding of the part, while the thus clustered fibers may move in all directions, without blocking the main flow into intricate details.

Surprisingly, the core layer transports the randomly orientated clusters of parallel fibers to the border or frame region of the structural part during the moulding phase. Furthermore, depending on where and how the randomly orientated clusters of parallel fibers are placed in the semi-finished before addition of the core layer, the core layer can transport the randomly orientated clusters of parallel fibers to form the surface regions of the border or frame region of the structural part. As the randomly orientated clusters are in a flat plate like state, when applied, they will remain substantially parallel to the surface of the plane while moved to their final position. Further enhancing the breaking strength in the border regions.

Overall, the addition of the randomly orientated clusters of parallel fibers increases the strength and stiffness of the border region over what it would be with just the core material.

Surprisingly, not only the overall breaking strength of the border region, but also the pull-out force of any area in the border with a fixation point improves, as any loads applied in a gap or hole area of the border can now be more efficiently distributed to the remained of the part.

The automotive structural part comprises a core layer comprising chopped fibers embedded in a first thermoplastic matrix.

Preferably, the chopped fiber content of the core layer is not more than around 35 % by weight of the core, preferably not more than around 30 % by weight of the core.

The chopped fibers of the core layer may have a fiber length above 5 mm and below 100 mm, preferably at least 80% of the fibers are between 10-25 mm.

The amount of fiber and fiber length of the core is chosen to maintain a balance of moldability during processing and strength and stiffness of the final material.

Shorter fibers would allow a thermoplastic material heated beyond its melting point to flow easier within the mould during forming as there would be less resistance to the flow of the thermoplastic. However, the performance of such a core material would be limited compared to one with longer fibers. The longer the core fiber, the more resistant to flow the core becomes and to overcome this would require higher press force to mould. Furthermore, the reduced flowability of the core in this scenario may prevent the core material from filling the cavity completely before hardening. In one preferred embodiment the core layer is produced using a Long Fiber Thermoplast (LFT) or a direct Long Fiber Thermoplastic (D-LFT or LFT-D) process.

The Long Fiber Thermoplastic (LFT) process may be used to obtain the core layer by reheating a pelletized core material comprising the matrix and chopped fibers. The length of the pelletized core material defines the maximal length of the chopped fibers in the core material. These fiber lengths are typically range from 2 - 25 mm.

In the D-LFT process filament tows are feed into the extruder while heating up the matrix, due to the action of the extruder the tows are chopped into smaller flakes forming the chopped fibers, while maintaining a longer overall average length. The cutting of the filaments within the direct LFT process can enable a wider range of fiber lengths. preferably the targeted average fiber length in the D-LFT process is between 2-50 mm. In certain instances, fibers in the range of 100 mm length may be present due to variations in the in process cutting and the flow of material through the extruder(s). Preferably such longer fibers are kept to a minimum as they increase the force required to shape the material. To achieve a good balance between moldability and final part strength and stiffness, it is therefore preferably to have at least 80% of the fibers having a final length upon moulding between 10-25 mm.

The substantial majority of long fibers in the long fiber reinforced thermoplastic layer have a fiber length above 5 mm and below 100 mm, preferably at least 80% of the fibers are between 10-25 mm.

The fiber content of the core layer is preferably below 35 %, preferably between 20 and 30 % by weight. While it is possible to achieve a higher fiber content in the core layer of up to around 40%%, this can adversely affect the flowability of the core during the forming process as the reinforcement fibers will hinder the flowability of the heated core material. Also the higher the fiber content in the core material, the higher the press force needed for the forming into the mold cavity of the LFT or D-LFT material. The risk with high core fiber content and limited press force is that part of the edge regions of the part will not fully form. Thus, keeping the fiber volume in the core below 35 % by weight and preferably between 20 and 30% by weight, will yield a good balance between the flowability of the core during moulding and the final strength and stiffness of the core. Furthermore, as impact absorbance is an important performance criterion for this type of part, a higher fiber volume content in the core may lead to a more brittle part. Therefore, it is preferably to limit the fiber volume of the core to below 40%.

Protrusions, like ribs, can be formed by the core material on its own, either moved through the skins or through dedicated opening in the skin layers. Examples of protrusion can be ribs, which are preferably formed on one side of the part. While having a maximum fiber content in the protrusion is desirable, again the flowability of the core into these, typically thin, walled protrusions must be considered. Thus, 35% is again the preferred maximum core fiber content that will effectively flow and fill these protrusions.

In these protrusions, as with the border region, the mechanical performance of can be increased by enriching the material locally in the protrusions with the randomly orientated clusters of parallel fibers.

The automotive structural part according to the invention comprises a first and second skin layer. These skin layers comprise continuous filaments in a second matrix.

The skins contain continuous filaments of reinforcement material embedded in a second thermoplastic matrix and may preferably be in the form of an organosheet, an impregnated non-crimp fabric (NCF) or unidirectional (UD) tape or tapes.

Unidirectional (UD) tapes -as used throughout this document- are endless fiber-reinforced tapes of different widths with unidirectional aligned reinforcing fibers in a thermoplastic matrix. Preferably, endless filaments may be used in UD tapes.

Organosheets - as used throughout this document- are semi-finished materials where endless filament-based reinforcing fabrics are embedded in a thermoplastic polymer matrix. Preferably the fabrics are one of a knit or woven textile structure.

Impregnated non-crimp fabrics (NCF) -as used throughout this document- are made of aligned reinforcing filaments or fibers held together by a stitch yarn embedded in a thermoplastic matrix. NCFs can be very flexible in their fabric layup and can vary from essentially a UD fabric to a fully isotropic fabric. An NCF can also be produced to be a mesh or grid with openings between the reinforcements, should this be desired. The stitching yarn does not interrupt the orientation of the filaments or fibers too much as the stitching yarn makes up only a tiny fraction of the overall fabric but the stitching yarn facilitates enough rigidness of the structure to hold any desirable shape.

Preferably endless filaments may be used in all reinforcing materials used for the skin layers. Typically, reinforcement materials as used in the skins contain several filament-based layers with specific orientation. Examples can be layers with two layers in 0° and 90° orientation, four layers in 0°, 90°/90°/0° or more layers and any angle between 0° and 90° are also possible. Alternating direction of the layering enables an equal stiffness in all directions of the part, however, for manufacturing efficiency 0° and 90° directions are preferred.

The cover layer or layers of the sandwich material forming the impact layer may be formed by either UD tapes, impregnated NCF tapes or organosheets, either in a single layer or in multiple layers. In the case of multiple layers they may be in alternating directions.

The benefit in using any type of skin material described is that a high fiber content by weight is possible. Therefore, the fiber content of the skins is preferably above 60%, and preferably above 65% by weight. The high fiber content and the endless filament nature of the skin layers imparts excellent mechanical properties to the composite sandwich construction, whereby the skin layers maximize the strength and stiffness performance achievable with the materials used.

With the typical filament placement of 0° and 90° of the skins, either through the weave, the UD tape or NCF structure, it is intuitive that square or rectangular shapes are the easiest to produce without incurring any waste. While the majority of these structural parts are generally in this shape, the border regions or part edges will typically have more complex geometries like irregular shaped part edges.

For the above reason and the reasons previously outlined regarding formability of endless filament skin materials, the automotive structural part according to the invention comprises only endless filament skin material in the central region of the part, while the border region comprises the core material extended beyond the skin layers and enriched by the randomly orientated clusters of parallel fibers to increase the fiber content and improve the mechanical performance in these border regions while still maintaining mouldability required in this border region of the part.

Sandwich parts may be compression moulded into a final shape, whereby the core material is pushed through the skin material to fill any ribs or protrusions on the surface to further enhance the structural performance of the sandwich part.

Protrusions in the scope of the invention as claimed may include but are not limited to at least one of a rib, a grid structure, a bead, a stiffening element, a fixation point, an aesthetic element, like a logo, a channeling element, an embossing element, or an air guiding element.

The skins are a major contributing factor to enabling of protrusions that are formed in-situ on the skin surface when the core material flows through the skins. To ensure that the core material is able to flow through the skins and effectively fill the protrusions, one option is the partially cut the skin layers in the region where the protrusions sit. Another option is to use a skin layer that has gaps between the filaments or filament bundles to allow the core to pass through these areas into the protrusions, this can be achieved through a looser weave or knit to leave openings between the intersections to allow the core to flow through. Alternatively randomly orientated clusters of parallel fibers may be placed, such that they are transported at least partly into the protrusion by the flow of the core material to enhance the strength and stiffness of the moulded protrusion.

Automotive structural part according to the invention comprises a core layer comprising chopped or chopped fibers embedded in a first thermoplastic matrix, and skin layers comprising continuous filaments embedded in at second thermoplastic matrix and randomly orientated clusters of parallel fibers embedded in a third thermoplastic matrix, whereby due to the nature of the original materials used, the core, the skins as well as the clusters of parallel fiber all come with their own matrix material.

Hence the thermoplastic matrix polymers of the randomly orientated clusters of parallel fibers, of the core, and of the skin can be chosen individually. Preferably the polymers of each matrix material are at least compatible.

Preferably all matrix materials are at least based on the same polymer. This ensures strong bonding between the different layers and allows efficient transfer of energy within the composite. However, as they can be chosen independent, they might differ in melt flow index, melting temperature and or the use of additives.

The first, second and third thermoplastic matrix used may comprise at least one or a combination of the following polymers or copolymers: a polyolefin type material for instance a polypropylene PP, a polyamide type material for instance, polyamide-6 PA6, polyamide 66 PA66, a polyester based material, for instance polyethylene terephthalate PET, polybutylene terephthalate PBT, a polycarbonate PC, or a polyether ether ketone PEEK.

The fiber reinforcement or the continuous filaments of the core, skin or clusters of parallel fibers are preferably inorganic, preferably they may be one of glass, basalt, aramid, carbon, and or organic, preferably natural fibers, preferably bast fibers, like hemp, kenaf, jute or flax or may be a mixture of these.

Preferably the bulk of the reinforcement fibers and filaments is glass based. Preferably all are glass based.

Automotive structural part according to the invention may further comprise at least one of a layer of mica and/or metal inserts and/or local metal reinforcement, preferably a plate, a channel or a rod.

Mica is a known flame-resistant material and is widely described in the art as a protection against thermal runaway in battery cells. By adding a mica plate onto a structural part as described in this invention, mica plates can provide a flame protection shielding layer to the structural part in case of a battery thermal runaway event occurs.

Mica is inherently in the form of platelets which can the processed into sheets. The platelets or sheets are bonded with a thermosetting polymer binder, preferably a silicon-based binder, to form plates.

The mica plate referred to here is preferably based on phlogopite.

The mica plate used is preferably between 0.5 and 3 mm thick.

The automotive structural part described herein can be applied as part of a battery housing or a protective plate for a battery housing.

In case the structural part according to the invention is used as part of the battery housing, the part may include gas guiding elements, either as ribs formed in the surface of the structural panel facing the batteries or by adding additional channels for instance metal channels and or guides.

Preferably, additional appliances can be added, for example for further stiffening, additional reinforcement, and/or embedded means for fixation points may be added as requested by the car maker. These additional appliances are preferably, metallic and may include plates, rods and/or inserts. Advantageously, they may be added during the moulding process. Alternatively they may be added once the completed part is removed from the tool, this is especially common for metallic inserts.

The method of producing an automotive structural part according to the invention, comprises the steps of:
- providing a first skin of continuous filaments embedded in a second thermoplastic matrix;
- placing at least one piece of hot extrudate of the core material comprising chopped fibers embedded in a first thermoplastic matrix;
- placing a second skin of continuous filaments embedded in a second thermoplastic matrix to cover the core;
- compression moulding the thus formed stack in the final shape whereby the core material flows between the skins and fills the mold beyond the skin layers.

The method is further comprising the step of placing, flakes of randomly orientated clusters of parallel fibers onto the first skin in areas at or close to the border regions, such that the clusters are moved by the flow of the core into their required position into at least the border region.

Surprisingly, it is possible to integrate the clusters within the material of the core locally for instance in the border region or in ribs, by placing them before the compression moulding step.

The temperature of the extrudate is preferably enough to melt the matrix of the clusters and or the skin to obtain a good bonding, but without substantially disturbing the direction of the fibers or the filaments.

If necessary, the skins and or the clusters might be preheated to enhance the binding and the process.

The part may be taken out of the tool as soon as it is cold enough to move without distortion of the part shape.

Placement of the randomly orientated clusters of parallel fibers will impact their final position as the flow of the core material will transport these. Thus, controlling the exact position of any individual cluster is impossible, however, placing multiple randomly orientated clusters of parallel fibers in the flow path will allow a certain degree of control and can guarantee that sufficient clusters end up in the desired region.

One example of this is to place a multitude of randomly orientated clusters of parallel fibers on the outer area of the first skin layer and place the hot extrudate or extrudates in dedicated areas on top of the first skin layer. When the second skin layer is added directly above the first skin layer it can be assumed that under compression the extrudate(s) core material will flow between the skins and towards the edges and will thereby push the randomly orientated clusters of parallel fibers beyond the skin, partly engulfing the clusters into the extrudate. If sufficient clusters are in the line of core flow during moulding, the majority of clusters will remain at the surface of the flow front thereby forcing the clusters to be on the surface of the border region. The clusters may be placed such that they end up where required. Preferably the size and or shape of the clusters may be optimized to enhance the flow behavior, when moved together with the core material. Some mixing of clusters into the LFT material or vice versa at the border area cannot be completely excluded but can be largely controlled with sufficient clusters, however, the core region may well contain some clusters.

With the flat surface of the part, it can be expected that most of the clusters will be pressed against the tool surface, and therefore should be substantially parallel to the surface, however, due to the flow of the core material, some clusters, especially those not at the surface, may not be in the plane of the surface. Any clusters absorbed into the core, may end up in any orientation as, in practice, this is difficult to control.

Furthermore, while the heated clusters are placed as randomly orientated clusters of parallel fibers, the flow and shear forces experienced by the clusters during moulding, may cause a significant amount of deviation from their initial parallel fiber orientation. This is however not critical, as the starting orientation of these clusters is already random, and the target of the invention is to have a border region that is enriched with extra reinforcement to improve mechanical performance in this border region beyond the skins, the final orientation of the fibers in the cluster is not critical as the target is to achieve a highly isotropic border reinforcement.

In the case where it is desirable to add additional reinforcement in the protrusions, a similar approach is suggested whereby the heated randomly orientated clusters of parallel fibers would be placed on or next to a slit, a gap or an opening in the skin through which the protrusion is foreseen to be filled. In this case, the flow of the core material would again transport the heated randomly orientated clusters of parallel fibers into the protrusions. In the case of protrusions, the orientation and distribution of the heated randomly orientated clusters of parallel fibers would be difficult to control as the cluster along with the core material would need to pass through openings in the skins and pass into and fill the protrusion.

### Drawings

Figure 1 shows a drawing of an example of randomly orientated clusters of parallel fibers according to the invention.
Figure 2 shows a schematic plan view of the structural part according to the invention with randomly orientated clusters of parallel fibers in the border region.
Figure 3 shows a cross-section of a possible structural part according to the invention.

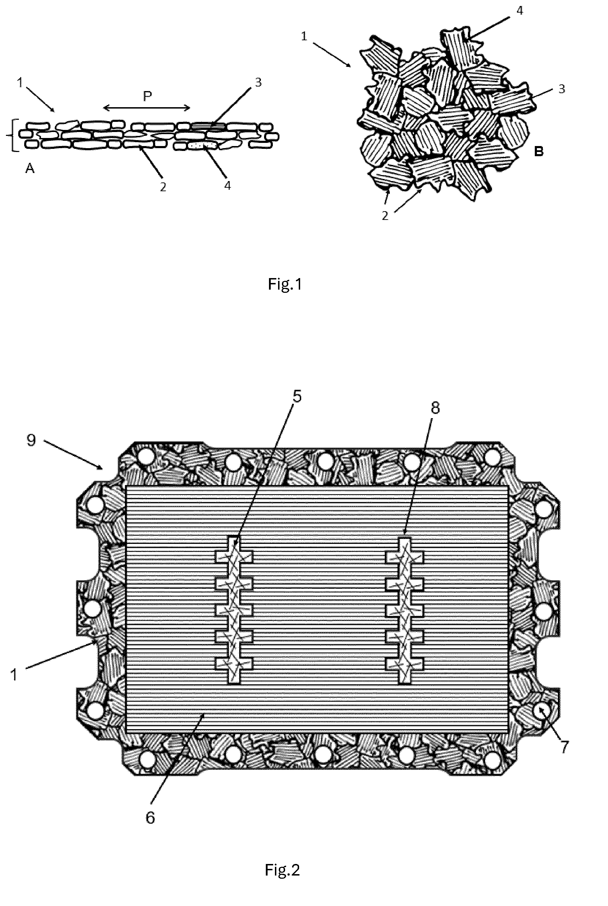

Figure 1 is showing schematically a cross section figure A and a top view figure B of an area or layer 1 formed by random randomly orientated clusters of parallel fibers 2,3 and 4. Upon forming against a tool surface, the flakes are arranged substantially in plane (indicated by double arrow P) to the surface of the flakes, however some flakes might have a direction differing from the in plane direction due to the flow of the core layer. An area or layer is preferably formed of more than one piece layered on top of at least some other flakes, such that after forming a layer with randomly orientated clusters of parallel fibers may be formed. For instance, one piece 3 might have a cluster of glass fibers indicated with the lines which are perpendicular from the direction of the cluster of glass fibers as indicated in piece 4 with the dots. Figure 1B is showing this effect from top view, in a real-life part, the direction might also change in a third dimension slanting upwards or downwards, especially due to the flow of the core material.

Figure 2 shows a plan view of the final part with randomly orientated clusters of parallel fibers 1 in the border region, along with the main central region of the part covered in skins 6, through which in select locations, protrusions like ribs 8 can be added. The border region will usually comprise some sort of fixation points and holes 7 to mount the part. To match the other components in the vehicle, the border region can be expected to have an irregular shape edge 9, with gaps or cutout sections to conform to neighbouring parts or simplify part installation. Due to the irregularity of the border contours 9, the border area typically does not contain skin material as this is more difficult to form, hence the need to add additional reinforcement in the border region with randomly orientated clusters of parallel fibers 1.

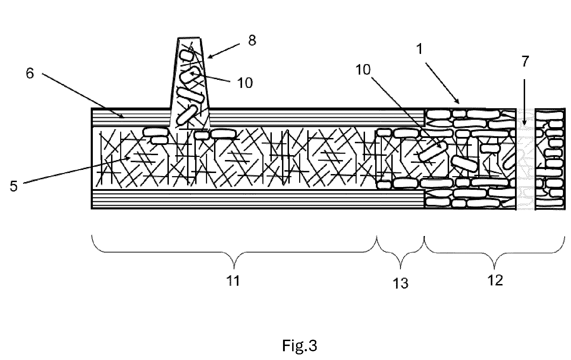

Figure 3 shows a cross-section of a possible final part where again the main central region of the part 11 contains the skins 6 and core 5 along with the optional protrusions 8. The border area 12 is clearly shown to comprise only randomly orientated clusters of parallel fibers 1 and core material 5. As previously outlines, it is also common for this region to contain fixation points and mounting holes 7. Due to the plate-like nature of the part, with targeted distribution of the randomly orientated clusters of parallel fibers before the moulding stage, it is possible that most clusters of parallel fibers 1 end up as a surface layer parallel to the tool surface on either side of the plate. However, due to the flow of the core 5 during moulding, it is possible that some clusters 10 area absorbed into the flow and can remain in the core at a random orientation. Due to flow of the randomly orientated clusters of parallel fibers 1 as they are transported into their final position through the flow of the core 5, the parallel alignment of the cluster fibers cannot necessarily be maintained. Due to manufacturability considerations, it may be convenient to stack or pile the randomly orientated clusters of parallel fibers 1 on the skin borders prior to pressing, for this reason it cannot be guaranteed that when the flow of the core 5 transports the randomly orientated clusters of parallel fibers 1 into the border region, not all randomly orientated clusters of parallel fibers 1 will be transported by the core 5. It is therefore likely that a transition zone 13 between the skin-core-skin configuration present over most o the part 11 and the border region 12 will be present, where skins, core and randomly orientated clusters of parallel fibers are present.

A similar phenomenon can also be expected in areas where the protrusions 8 are to be enriched with randomly orientated clusters of parallel fibers. Here again for manufacturing considerations, it may be easier to add multiple randomly orientated clusters of parallel fibers around an opening in the skins 6 where a protrusion 8 is to be formed and then allow these to be transported to the final position by the flow of the core 5. For this reason, a transition zone between the skins 6 and the protrusion 8 can be formed where there is an area where the randomly orientated clusters of parallel fibers are also present where there is skin 6 material. Again, as before due to the flow of the core, the final position of the cluster in the protrusion 8 may be unpredictable and not aligned 10.

## Claims

1. Automotive structural part comprising a core layer and a first and second skin layer, and whereby the core layer is compressed between the skin layers and whereby the core layer extends beyond both skin layers in at least one border region, **characterized in that** the core layer at least in part of the border region further comprises randomly orientated clusters of parallel fibers.

2. Automotive structural part according to claim 1 whereby the core layer comprises chopped fibers embedded in a first thermoplastic matrix.

3. Automotive structural part according to claim 1 or 2, whereby the first and second skin layer comprises continuous filaments embedded in a second thermoplastic matrix.

4. Automotive structural part according to the preceding claims, whereby the randomly orientated clusters of parallel fibers are embedded in a third thermoplastic matrix.

5. Automotive structural part according to one of the preceding claims, whereby the density in the border is at least 10% higher than the density of the core material.

6. Automotive structural part according to the preceding claims, whereby at least one border region comprises randomly orientated clusters of parallel fibers, with a fiber content of at least 35% by weight, preferably at least 40%.

7. Automotive structural part according to one of the preceding claims, whereby at least part of the clusters of parallel fibers are organized with the fibers substantially parallel to the major plane of the part, while the fibers of the core are organized in random order throughout the core layer.

8. Automotive structural part according to one of the preceding claims, whereby the clusters are such that most fibers within the clusters have at least a fiber length between 2 and 100 mm, preferably between 3 and 20 mm.

9. Automotive structural part according to the preceding claims, whereby the core layer comprises chopped fibers embedded in a first thermoplastic matrix having an average fiber length above 5 mm and below 100 mm, preferably at least 80% of the fibers are between 10-25 mm.

10. Automotive structural part according to the preceding claims, whereby the chopped fiber content of the core layer is not more than around 35 %, preferably not more than around 30 % by weight.

11. Automotive structural part according to the preceding claims, whereby the skins comprise continuous filaments embedded in a second thermoplastic matrix in the form of an organosheet, an impregnated non-crimp fabric (NCF), or unidirectional (UD) tape, preferably both skins comprise the same.

12. Automotive structural part according to the previous claims, whereby the skins comprises unidirectional tapes with at least more than one ply organized as cross ply in 0 and 90° angle to the fiber direction in the adjacent ply, or as multi-ply in any angle between and included 0 and 90° to the fiber direction in the adjacent ply or plies.

13. Automotive structural part according to the preceding claims, whereby the filament content of the skins is above 60%, preferably above 65% by weight.

14. Automotive structural part according to the preceding claims, whereby the chopped fibers of the core layer and/or the continuous filaments of first and or second skin layer and/or the parallel fibers of the clusters comprise at least one of glass fiber, basalt fiber, aramid fiber, carbon fiber or natural fiber or a mixture thereof.

15. Automotive structural part according to the preceding claims whereby the material of the first and/or the second and/or the third matrix comprises, a polymer or copolymer of a polyolefin, preferably a polypropylene PP and or a polypropylene copolymer, a polyamide, preferably polyamide-6 PA6, polyamide 66 PA66, a polyester, preferably a terephthalate based polyester, preferably polyethylene terephthalate PET, polybutylene terephthalate PBT, a polycarbonate PC, or a polyether ether ketone PEEK, preferably all matrix are based on the same material.

16. Automotive structural part according to the preceding claims further comprising at least one of a layer of mica plate and/or metal inserts and/or local metal reinforcement, preferably a plate, a channel, or a rod.

17. The method of producing an automotive structural part according to the invention, comprises the steps of;
- providing a first skin of continuous filaments embedded in a second thermoplastic matrix;
- placing at least one piece of a hot extrudate of core material comprising chopped fibers embedded in a first thermoplastic matrix;
- placing a second skin of continuous filaments embedded in a second thermoplastic matrix to cover the core;
- compression moulding the thus formed stack in the final shape whereby the core material flows and fills the mould cavity beyond the skin layers **characterized in that** the method further comprises the step of placing flakes of randomly orientated clusters of parallel fibers in areas at or close to the border regions preferably onto the first skin, such that the clusters are moved by the flow of the core into their required position into at least the border region.
